# EUROPEAN PATENT SPECIFICATION

(11) **EP 3 546 839 B1**
(45) Date of publication and mention of the grant of the patent: **06.01.2021**
(21) Application number: 18163968.3
(22) Date of filing: 26.03.2018
(51) Int. Cl.: F24D 3/10

(54) **MODULAR ROUTING DEVICE FOR A CONFIGURABLE FLUIDIC COUPLING OF THREE FUNCTIONAL DEVICES WITH HEATING AND/OR COOLING CIRCUITS**
MODULARE FÜHRUNGSEINRICHTUNG FÜR EINE KONFIGURIERBARE FLUIDISCHE KOPPLUNG VON DREI FUNKTIONELLEN VORRICHTUNGEN MIT HEIZ- UND/ODER KÜHLKREISLÄUFEN
DISPOSITIF DE ROUTAGE MODULAIRE POUR UN COUPLAGE FLUIDIQUE CONFIGURABLE DE TROIS DISPOSITIFS FONCTIONNELS COMPORTANT DES CIRCUITS DE CHAUFFAGE ET/OU DE REFROIDISSEMENT

(43) Date of publication of application: 02.10.2019
(73) Proprietor: Mitsubishi Electric R&D Centre Europe B.V., Houstoun Industrial Estate Livingston EH54 5DJ (GB); Mitsubishi Electric Corporation, Tokyo 100-8310 (JP)
(72) Inventor: Salvador, Michael, Livingston, EH54 5DJ (GB)
(74) Representative: Pfenning, Meinig & Partner mbB

(56) References cited:
- EP-A1- 1 992 882
- EP-A2- 1 826 503
- DE-A1- 3 245 416
- DE-U1- 20 019 953
- US-A1- 2010 293 982

## Description

The invention relates to a routing device for a configurable fluidic coupling of exactly three functional devices which each comprise a respective heating and/or cooling circuit, with three connector units for connecting the three functional devices to the routing device, where each of the connector units comprises an inlet and an outlet for a fluidic coupling of the heating and/or cooling circuit of the respective connected functional device with a valve unit of the routing device, with the valve unit comprising a plurality of valves, and with a control unit to switch the valves of the valve unit according to a preset control scheme.

In modern heating, ventilation, and air conditioning (HVAC) systems, the usage of renewable energy forms together with conventional energy forms becomes more and more popular. For example, solar thermal systems can provide space heating and domestic hot water, just as, for instance, a heat pump or a gas boiler, or other heat sources. Each of these devices has different specifications, though, and consequently reach the maximum efficiency under different boundary conditions. So, a solar thermal system reaches its maximum efficiency when there is a lot of sun, an air source heat pump when the outside temperature is between 7 and 15° C, and a typical condensing gas boiler when an intake air temperature is lower than 0° C.

Apparently, in a complex system with several heat sources or other devices such as thermal storage devices or different kinds of heat load devices, in order to arrive at an efficient energy usage, not only the devices themselves but also the connection and interaction of the devices becomes more and more important. So, the way the different devices are connected and operated has a heavy impact on efficiency of the heat usage and energy saving.

Moreover, conventionally, thermal storage devices are difficult to integrate into hydronic systems with a circuit with circulating transport and/or working medium. Usually, water tanks take a lot of space and have a significant thermal loss, but may provide high power rate storage and reliability. On the other hand, phase change material storage devices become more and more reliable and are in general more compact and more efficient than a water tank. However, their characteristics are more complex.

In this context, the WO 2011/140369 A1 describes the utilisation of an energy chassis device designed to sense, collect, store and distribute energy from where it is available using devices that harvest or convert energy to locations requiring energy such as HVAC systems.

US 2010/0293982 A1 discloses a distributor unit coupled to a heat pump and two various circuits for collecting and for delivering heat, with the unit serving to provide selective interconnection between an application of various predetermined combinational schemes for fluid distribution by automatically controlling an integrated network of stop valves. The schemes define modes of operation such as natural cooling or freeze-proofing, producing hot water and/or air conditioning from a single installation by optimizing transfers of heat between the circuits so that the heat pump is always operating in its thermodynamically optimum zone. Therein, the heating and air conditioning installation comprises a total of at least four inlets/outlets, namely a first inlet/outlet, a second inlet/outlet, at least one third inlet/outlet and at least one fourth inlet/outlet.

EP 1 992 882 A1 describes a heating installation with a fluid switching device integrated in a control cabinet, with a program regulation device controlling circulators, electro valves and a heat pump. The cabinet has hydraulic connections permitting connection of solar panels, underground collectors, primary circuit of a heat pump and an exchanger of a surge tank. In total, a number of four different devices is coupled to the fluid switching device.

The US 4 880 993 A discloses a combined heat and power system for a building having a heat demand comprising a prime mover, an electrical generator, that is adapted to provide building power, this said prime mover being drivingly connected to the electrical generator, a heat recovery arrangement which is connected to the prime mover and that recovers heat from the prime mover, and at adapted to provide building heating, as well as a control arrangement adapted automatically to control the prime mover in response to the heating demand.

Furthermore, the WO 2014/095026 A1 discloses a multi-circuit heating or cooling system which has a mixed heating circuit such that a buffer store for storing heat is integrated and the mixed heating stroked can be operated with the heat from the buffer store or from a heat source. A priority circuit for the buffer store charges the buffer store with heat from the heat stores, and the buffer store is integrated into a hot potable water processing means. In addition, solar thermal heat sources can be integrated, and the multi-circuit heating or cooling system has an especially simple design which is economically constructed.

It can hence be considered an objective of the present invention to realise an efficient fluidic coupling of functional devices such as heat source devices, thermal storage devices, and/or heat load devices.

That objective is achieved by the subject matter of the independent claims. Advantageous embodiments are disclosed in the dependent claims, the description, and the figures.

One aspect of the invention relates to a routing device for a configurable fluidic coupling of exactly three functional devices which each comprise a respective heating and/or cooling circuit. That heating and/or cooling circuit may be understood as any form of circuit designed for transporting heat via a working/transport medium, in particular via a liquid and/or gas medium. The routing device comprises exactly three connector units which may be referred to as "docks" or "sockets" for connecting, that is, plugging in, the three functional devices to the routing device. The functional devices may be connected to the routing device. The functional devices may be connected to the connector units directly or via another unit such as a pump unit or a pipe unit. Said other units also may be part of the routing device.

Therein, each of the connector units comprises an inlet and an outlet for a fluidic coupling of the heating and/or cooling circuit of the respective functional device (connected or to be connected to the routing device) with a valve unit of the routing device. As the flow direction of a medium through the respective heating and/or cooling circuit of the respective functional devices may change its direction (e.g. in dependence upon a preset control scheme, see below, or a desired function of the routing device according in a preset control scheme), the actual connection point of each of the connector units functioning as inlet or outlet respectively may change in dependence of the function of the functional device or the configuration of the routing device. So, the inlets and/or outlets may also be generally referred to as first and second circuit point of the respective connector unit.

Furthermore, the routing device comprises the valve unit with a plurality of pipes and a plurality of valves. In particular, the valve unit may be considered as an incomplete circuit with said plurality of valves, which is or is to be completed by the heating and/or cooling circuits of the respective functional devices connected to the connector units, and hence to the valve unit. The routing device also comprises a control unit configured to control and/or switch the valves of the valve unit according to a preset control scheme.

Hence, the control unit is configured to switch the valves thereby reversibly configure (and reconfigure) the fluidic coupling of the valve unit with the heating and/or cooling circuits of the respective connected functional devices via the inlets and outlets of the respective connector units. The control scheme may also be referred to as control algorithm or control rule. The control scheme may be dependent on further parameters, such as a user input and/or a state of the connected devices and/or a state of the routing device itself and/or sensory data.

Therein, the valve unit is configured for a switchable fluidic coupling and/or decoupling of the inlet of any of the connector units with any of the inlets and/or outlets of the other connector units and for a switchable fluidic coupling and/or decoupling of the outlet of any of the connector units with any of the inlet and or outlets of the other connector units.

The control unit is configured to hold or store at least one, that is one or some, in particular all, of several different interchangeable preset control schemes. In particular, that may refer to at least 4 or at least 7 or at least 10, or exactly 17 different interchangeable preset control schemes. Each of the preset control schemes is characterised by a scheme-specific combination of preset device-types for the exactly three functional devices to be connected to the exactly three connector units, that is, to the routing device. So, each control scheme is assigned to a specific combination of preset device-types for the connected functional devices. If the control unit is configured to hold only one single preset control scheme, said single preset control scheme may also be referred to as used control scheme in order to differentiate it from the rest of the preset control schemes stored not used by the control unit.

If the control unit is configured to hold some or all of the several different interchangeable preset control schemes, the control unit is configured to switch the valves of the valve unit according to one selected or activated specific preset control scheme. Said selected or activated preset control scheme may also be referred to as used control scheme in order to differentiate it from the rest of the preset control schemes. The control scheme can, for instance, be selected or activated by a user installing and setting up the routing device in a specific environment with specific functional devices or a specific combination of functional device-types. Hence, the preset control scheme according to which the control unit switches the valves of the valve unit when the routing device is operated is selected when setting up and/or installing a routing device system with specific functional devices to be connected or connected to the routing device. That configuration can be interpreted in that the control unit is assumes or knows different combinations of connected functional devices.

For instance, in the control unit, a representation of each of the connector units may be digitally or electronically labelled or marked as being connected to exactly one of the preset device-types of functional devices and to control the valves in dependence upon the labels of the connector units according to the appropriate preset control scheme assigned to the specific combination of preset device-types.

In particular, some or all of the different control schemes may be stored in the control unit. Preferably, they can be activated by a user input, e. g. by specifying the device-type of the functional devices connected or to be connected in the installation scenario at hand. This gives the advantage that the routing device may be a generic routing device which may be configured and hence adapted to the specific functional devices at an installation location. Furthermore, the configuration of the routing device, that is the selected or activated preset control scheme according to which the valves are switched, may easily be changed afterwards, for example when a new functional device is added to the routing device after an initial installation.

The features and characteristics described above result in a flexible and robust connection of different functional devices with a number of advantages. Namely, the same routing device may be used for different scenarios or installation systems, that is, for example in houses where different types of functional devices working together. So, the same routing device may be used in many different installation scenarios rendering both installation and maintenance more easy and reliable. Furthermore, the routing device may be used to integrate a new functional device efficiently into an existing circuit where already at least two functional devices are present. Here, the number of exactly three connector units is particularly advantageous, as a new functional device can simply be added to existing devices via the proposed routing device, where the routing device with the new functional device can be connected to the two pre-installed functional devices. As the number of connector units is restricted to three, the preset control schemes are particularly simple as the number of valves and, accordingly, the number of the switching configurations of the valve unit is still relatively limited and yet allows the switchable fluidic coupling of any inlet with any inlet/outlet of the other connector units. In addition, said restriction to three connector units does not impose a severe restrain on the possible installation scenarios for the routing device, as, since the routing device is a modular routing device, several routing devices can be connected and fluidically coupled to each other for increasing the number of devices connected and fluidically coupled to each other, while still maintaining simplicity for the preset control schemes.

In an advantageous embodiment, the preset device-types for the functional devices comprise a heat source device type and/or a thermal storage device-type and/or a heat load device type and/or a routing device type. In particular, the routing device-type may refer to another, additional modular routing device preferably identical to the routing device described here.

The described device-types give the advantage that the desired behaviour of the routing device can be mapped on to the preset control scheme for any possible combination of functional devices, as all devices can be categorized in one of the three or four device-types. In particular, the routing device type enables the usage of an additional routing device so as to connect more than three functional devices with each other.

When the preset device-types comprise the routing device type, the control unit may be configured to be operated (and/or switched) in a superordinate (master) mode and/or in a subordinate (slave) mode. In the master mode, the (master) control unit is configured to control another (slave) control unit of another (slave) routing device connected to one of the connector units of the superordinate (master) routing device with the superordinate (master) control unit and, in the slave mode, the (slave) control unit is configured to be controlled by another (master) control unit of another (master) routing device connected to a connector unit of the subordinate (slave) routing device with the (slave) control unit operated in the subordinate mode.

This gives the advantage that a hierarchical system is realised where the number of functional devices other than of the routing device type is not limited. To this end, a subordinate routing device may also be connected to a superordinate routing device indirectly, that is via another subordinate routing device via an appropriate interface. So, several levels of subordinate routing devices may be implemented that all are controlled by one single superordinate control unit. Therein, one subordinate control unit may also be configured to control another control unit by itself within boundary conditions set by the superordinate control unit. This gives rise to an improved flexibility of the routing device, where the number of functional devices that can be controlled by the routing device are, in principal, not limited.

In another advantageous embodiment, the valves of the plurality of valves of the valve unit are all two-way valves, in particular, on/ off valves.

This gives the advantage that the setup of the valve unit and hence the preset control schemes are particularly simple. Accordingly, the valve unit is very robust.

In yet another advantageous embodiment, at least two of the connector units, preferably any two of the connector units, can be switched to be coupled in series by the valve unit controlled by the control unit or at least two of the connector units, preferably any two of the connector units, can be switched to be either coupled in series or in parallel by the valve unit controlled by the control unit. Here, two connector units are considered to be coupled in series when, in operation of the routing device heat is transferred to the outlet of the first connector unit and the heat returning from the associated functional device via the inlet of the first connector unit is transferred to the outlet of the second of the two connector units for further use. So, in particular, the inlet of one connector unit is coupled only with the outlet of another connector unit. In contrast, when two connector units are coupled in parallel, heat is either transferred from an inlet of the third connector unit to the outlets of the two coupled connector units and heat from the inlets of the two coupled connector units is joinedly transferred to the outlet of the third connector unit. So, in particular, the inlet of a first connector unit is coupled with the two outlets of the other connector units and the outlet of the first connector unit is coupled with the inlets of the other connector units.

This gives rise to a specifically flexible and energy efficient operation for the routing device and the connected functional devices, as, for instance, heat can first be transferred to a high temperature emitter connected to the routing device and the remaining heat can directly be routed to a low temperature emitter such as an underfloor heating, for instance, and hence improve the efficiency of the overall heating system.

In a further advantageous embodiment, at least one of the connector units, preferably two or three of the connector units, comprise at least one internal sensor, for instance within the below introduced housing, and/or at least one sensor interface to be connected to an external sensor of the respective functional device connected to or to be connected to the connector unit. Therein, the sensor and/or sensor interface is configured to provide sensory data and the preset control schemes of the control unit are dependent on the sensory data.

This gives the advantage that a specifically energy efficient and precise management of the heat distribution can be realised by the routing device.

Therein, the at least one internal and/or external sensor may comprise a temperature sensor for sensing temperature of a working or transport medium in the corresponding heating and/or cooling circuit at the inlet of the respective connector unit and/or a temperature sensor for sensing a temperature of a working or transport medium in the corresponding heating and/or cooling circuit at the outlet of the respective connector unit and/or a flow sensor for sensing a flow of the working or transport medium in the corresponding heating and/or cooling circuit at the inlet and/or the outlet of the respective connector unit. Therein, it has to be mentioned that the flow of the working or transport medium at the inlet and the outlet of one respective connector unit are of course entangled as a flow through the outlet should equal the flow through the inlet.

This gives the advantage that the functioning of the different functional devices and the respective characteristics can be monitored precisely so that the preset control scheme may achieve a specifically efficient and precise energy management.

In another advantageous embodiment, the routing device has a housing in which the valve unit is arranged. Preferably, the connector units are arranged on or at the housing and/or the control unit is arranged in the housing. Preferably, the functional devices are to be arranged outside the housing.

The housing gives the advantage that the handling and installation of the routing device, also of several routing devices is particularly simple. Furthermore, maintenance is improved as the routing device can be replaced easily.

In another advantageous embodiment, the routing device comprises one or more pump units, in particular exactly one, exactly two, or exactly three pump units, to regulate a flow rate or several flow rates of a working or heat transport medium through the routing device. The pump units are preferably controlled by the control unit. In particular, each pump unit may be part of or connected to one of the connector units. Here, the flow rate that is regulated by the one or more pump units may either be a single global flow rate, where the flow through different pipes of the routing device is given by branching of the different pipes in the routing device, or comprise several local flow rates that may individually be adjusted by the one or more pump units. To this end, one or several of the one or more pump units may comprise a respective bypass or short-circuit that allows the local adaptation of the flow rate in the respective routing device.

This gives the advantage that interoperability and flexibility is enhanced, as the requirements for the functional devices themselves are lowered and effects like a flow inversion, for instance, can be realised easily.

Preferably, the pump units each belong to one of several preset pump types and the control scheme is dependent on the pump type of or the pump types of the one or more pump units. In particular, the preset pump types for the pump units comprise a thermal dual pump type and/or a thermal pump type and/or a dual pump type and/or a simplex pump type. Therein, in all pump types, the respective pump can be bypassed and each of the pump units can regulate the pump flow rate, for instance by use of a speed control pump.

This gives the advantage that the respective pump units can, similar to the functional devices, be modularly chosen and included in the routing device and increase the overall efficiency and flexibility as the control scheme can be adapted to the enhanced flexibility and interoperability provided by the respective pump units.

In particular, according to the thermal dual pump type, the respective pump unit can operate on the cold and on the hot side of a respective cooling and/or heating circuit, and perform thermal regulation by, for instance mixing the medium of the cold and/or hot branch of the cooling and/or heating cycle with each other. Furthermore, the thermal dual pump type pump unit (or thermal dual pump unit, for short) can short-circuit the connected functional device and perform a closed loop pumping with the functional device. This is advantageous after a change of routing where cold water is flowing through parts of a circuit where hot water has been before or vice versa, and where closed loop pumping can help avoid a thermal shock of the components of the corresponding functional device. A thermal dual pump unit is particularly suitable for space heating and cooling as well as a bidirectional district heating heat exchanger as connected functional device.

The thermal pump type pump unit, on the other hand, can operate only in the cold or hot branch of a cooling and/or heating circuit, and may perform thermal regulation as well. Also, the thermal pump can perform a closed loop pumping with the attached functional device. The thermal pump type unit (or thermal pump unit, for short) is particularly suitable for space heating or cooling and unidirectional district heating heat exchanger as functional device.

A pump unit of a dual pump type corresponds to the thermal dual pump type, but is not able to perform a thermal regulation. Such a pumping unit (dual pump unit, for short) is particularly suitable for a heat pump with a domestic hot water tank or storage device, a solar system with a water tank or a thermal storage device as functional device.

The simplex pump type unit (simplex pump unit, for short) corresponds to the thermal pump, but cannot perform thermal regulation or closed loop pumping. Such a simplex pump unit is particularly suitable for a solar system without tank as functional device or a heat loss recovery system as functional device.

The described modular setup allows for a simple system with maximal interoperability of different devices and flexibility for the respective routing in a modular way.

In another, particularly advantageous embodiment, values of at least one, that is one or more additional parameters can be set in the control unit and/or retrieved by the control unit from the respective functional device or functional devices via a suitable interface of the routing device. Therein, the at least one additional parameter comprises one or more of the following parameters: a lower temperature limit of at least one of the functional devices; an upper temperature limit of at least one of the functional devices; a lower flow limit of at least one of the functional devices; an upper flow limit of at least one of the functional devices; a safety high temperature limit for a working medium, which may be set to a default value as for instance 75°C, and which, for instance may not be set higher than a preset value such as 95°C; a safety low temperature limit for a working medium, which may be set to a default value as 5°C and which preferably may not be set to a value lower than a lower limit such as -35°C; a minimal temperature currently available for a working medium in at least one of the functional devices; a maximal temperature currently available for a working medium in at least one of the functional devices; a current availability of at least one of the functional devices, which may be a Boolean value; a current availability of a heating and/or cooling function of at least one of the functional devices, which may be set to heating only, cooling only, or heating and cooling; an upper flow limit for at least one of the functional devices; a lower flow limit of at least one of the functional devices; a currently available flow or flow change of a working medium through at least one of the functional devices; a specification of at least one of the functional devices, in particular of a thermal storage device-type functional device and/or of a heat source device-type functional device, where the specification may comprise: a type index indicating if the thermal storage comprises or is a domestic water storage and/or a phase change material and/or a district heating system, and/or indicating if the heat source device comprises or is a renewable source and/or a biomass source and/or a hybrid renewable source and/or a fossil source, and/or indicating a capacity, in particular a volume, of the thermal storage device, and/or indicating a phase change temperature of the phase change material, and/or indicating a temperature difference between the phase change temperature of the phase change material and the temperature of a working medium in the thermal storage, and/or indicating a latent capacity of the phase change material, and/or indicating a selling price for providing heat to and/or a purchasing price for receiving heat from the district heating system. Therein, the preset control scheme of the control unit is dependent on the parameter values or the parameter value.

Said parameters give the advantage of a particular energy saving and simple operation of the routing device with the connected functional devices.

In another advantageous embodiment, in a case where the preset control scheme is characterised by two of the functional devices to be connected to or connected to the routing device (directly or via another routing device) being a heat source device or a thermal storage device, in particular a thermal storage device in a source mode configured to provide heat, the control unit is configured to priorise the functional devices in dependence upon a preset priorization criterion. For instance, two heat source devices or one heat source device and a thermal storage device or two thermal storage devices can be connected or can be to be connected to the routing device in this case. The functional devices may, in particular, be priorised in dependence upon a normalised exergy of the respective functional devices as preset priorization criterion. The control unit is configured to adapt or set the control scheme such that in operation of the routing device, heat is provided to the remaining third functional device from either only one or two of the first functional devices in dependence upon a result of the priorisation. This priorisation may be a dynamic priorisation, hence be executed for instance periodically or in real time.

Here, the normalised exergy may be the exergy of the heat source device or the thermal storage device in a heating mode normalised to the demand, that is, the exergy of all the load. Hence, a normalised exergy Ex of one (Ex=1) means that the respective functional device can supply 100% of all the load, for example 100% of the load of the third functional device. A normalised exergy of 0 (Ex=0) means that the respective functional device is not available. Correspondingly, a normalised exergy between 0 and 1 means that the respective functional device may provide some of the required heat. For instance, the exergy may be defined as Ex = T-Tₒᵤₜ / (Tᵢₙ-Tₒᵤₜ) where Tᵢₙ is the temperature required for a thermal load, Tₒᵤₜ is the temperature returned from said thermal load, and T is the temperature available from the heat source. For instance, fossil heat source devices as gas boilers have an exergy always equal to one. For a heat pump, the exergy may be lower than one, for example if the outside temperature is too low for an air source heat pump or if a borehole is depleted for a ground source heat pump. Therein, a minimum exergy level, for instance 0.2 may be set in order to allow the control unit to use heat of the respective functional device to cover the load.

In a preferred embodiment, the normalised exergy may also be used to calculate a priorisation score where, for instance, a heat source device or a thermal storage device in a heat providing mode with a higher score is preferred with respect to a heat source device or a thermal storage device in a heat providing mode with a lower score. Such a score may be set in a way that renewable sources such as solar thermal heat sources are always preferred and fossil energy sources like gas are only used if no alternative is available. For instance, such a score S may be defined as a product of the normalised exergy Ex with a specific factor f characteristic for the type of the heat source (S=f^{∗}Ex) if the exergy of the heat source is smaller than one, and as a preset score if the exergy is one. For example, for a renewable source, the score S can be set to six (S=6) if the corresponding normalised exergy is one, and be set to f=1.4 times Ex (S=1,4^{∗}Ex) for Ex< 1; for a biomass heat source, the score can be set to 5 when the normalised exergy is 1 and to f=1.3 times Ex if Ex = Ex < 1; for a heat storage device in a heat providing mode to 4 if the exergy is 1 and to f=1.2 times Ex = Ex < 1; and for a hybrid renewable energy source such as a heat pump to 2 if the corresponding normalised exergy is 1 and to f=1 times exergy if the exergy is smaller than 1. As for a fossil heat source, the score can be set to 2, for instance. Therein, a minimum score required for the choosing of the respective heat source can be set, for instance to a score of 0.75. The functional device with the highest score S and with Ex = 1 may be set to be the main device by the control scheme, that is the functional device that meets the heat demand or heat load. This device can be combined with any other available functional device providing heat, for instance to meet a temperature request and/or to contribute exergy of another functional device.

Consequently, the control scheme can be adapted by the control unit such that a renewable source as one of the first two functional devices may be solely used when it can supply 100% of the required load whereas, when the renewable source cannot provide all of the required load, a mixture of the renewable source and for example heat stored in the thermal storage device is used for covering the load.

This gives the advantage that energy can be used very efficiently and eco-friendly, in particular in systems where the routing device and for example a renewable source are installed into an already existing old heating system with no renewable source, for instance.

In another advantageous embodiment, in a case where the preset control scheme is characterised by two of the functional devices to be connected to or connected to the routing device (directly or via another routing device) being a heat load device or thermal storage device, the control unit is configured to priorise the functional devices in dependence upon a preset priorisation criterion and to adapt or set the control scheme such that in operation of the routing device the two functional devices are coupled in series. Therein, in particular the control unit may be configured to priorise the functional devices in dependence upon a maximum value of a required input temperature for a working/transport medium provided to the respective functional device as priorisation criterion. In particular, heat is provided to the functional device with the lower maximum value via the functional device with the higher maximum value. So, the working or transport medium for the heat may first be fed into the functional device with the higher maximum value, and fed into the functional device with the lower maximum value after returning to the routing device. In particular, the thermal storage device may be a thermal storage device in a load mode, configured to receive heat. So, the two functional devices connected to or to be connected to the routing device may be for instance to heat load devices or one heat load device and one thermal storage device in the load mode or two thermal storage devices in the load mode.

This gives the advantage that the heat can be distributed more efficiently in a variable, flexible way.

In another advantageous embodiment, the control scheme can be adapted by the control unit according to different operating modes. Therein, in particular, the operating modes may comprise one or more of the following operating modes: a domestic hot water providing mode and/or a heating mode and/or a storing mode and/or an energy management mode. Therein, the domestic hot water providing mode may have a top priority as compared to heating mode and/or storing mode and/ore energy management mode. The heating mode may be activated when a external temperature control system, for instance the control system of a room heating, sends a signal to the routing device. The storing mode may be activated when at least one of the functional devices is a heat storage device which is not full and a renewable energy source such as a solar thermal energy source or a biomass energy source or a photovoltaic production for a heat pump source or a combination of these is available so that heat can be produced in an economically efficient way. In a thermal energy management mode, the routing device may try to route or transfer heat from a thermal storage device with a lower charge level to a thermal storage device with a higher charge level when more than one thermal energy storage device is available to improve efficiency.

Another aspect of the invention relates to a routing device system with a routing device as described above and one or two or three functional devices, where each of the functional devices is either a heat source device or a thermal storage device or a heat load device or another routing device.

A further aspect of the invention relates to a modular routing system with two or more routing devices according to any of the described aspects or embodiments connected to each other via one of the respective connection units.

In an advantageous embodiment of said modular routing system, the modular routing system may comprise a subordinate first (slave) routing device wherein the used preset control scheme is characterised by at least one, preferably two of the connector units to be connected to a heat source device as functional device and one connector unit to be connected to a superordinate (master) routing device, and/or a subordinate second (slave) routing device wherein the used preset control scheme is characterised by at least one, preferably two of the connector units to be connected to a thermal storage device as functional device and one connector unit to be connected to the superordinate (master) routing device, and/or a subordinate third (slave) routing device wherein the used preset control scheme is characterised by at least one, preferably two of the connector units to be connected to a heat load device as functional device and one connector unit to be connected to the superordinate routing device, and the superordinate (master) routing device where the preset control scheme is characterised by at least one of the connector units to be or being connected to one of said subordinate routing devices, in particular characterised by two of the connector units each to be or being connected to one respective subordinate routing device of said subordinate routing devices or characterised by three connector units each to be or being connected to one respective subordinate routing device of said above described subordinate routing devices. For instance, one subordinate first routing device, one subordinate second routing device and one subordinate third routing device may be connected to the superordinate routing device. Alternatively, any combination, for instance two subordinate first routing devices and one subordinate third routing device may be connected to the superordinate routing device. In a preferred embodiment, the respective functional devices corresponding to the control schemes used by the respective routing device may be connected to the respective routing devices. Such a routing system may also comprise several hierarchical levels, for instance one or more subordinate (first or second or third) routing devices connected to two functional devices of the same device-type which is connected to another subordinate (first or second or third) routing device connected to a functional device of the same device-type as said two functional devices and to the superordinate routing device.

This gives the advantage of a specifically simple setup, where the superordinate control device, that is, the control device of the superordinate routing device may manage the heat routing or heat transfer between the functional devices of the different device types in a particular easy and reliable way.

Another aspect of the invention relates to a method for operating a routing device, where the routing device is designed or configured for a configurable fluidic coupling of exactly three functional devices which each comprise a respective heating and/or cooling circuit. Therein, the routing device comprises exactly three connector units for connecting the exactly three functional devices to the routing device, where each of the connector units comprises an inlet and an outlet for a fluidic coupling of the heating and/or cooling circuit of the respective connected functional device with a valve unit of the routing device, the valve unit comprising a plurality of valves. Therein, the valve unit is configured for a switchable fluidic coupling of the inlet of any of the connector units with any of the inlets and/or outlets of the other connector units and for a switchable fluidic coupling of the outlet of any of the connector units with any of the inlets and outlets of the other connector units. Furthermore, the routing device comprises a control unit to control and/or switch the valves of the valve unit according to a preset control scheme.

The method for operating that routing device comprises the method step of selecting one several different interchangeable preset control schemes for the control unit, where each preset control scheme is characterised by a scheme specific combination of preset device types for or of the functional devices connected or to be connected to the connector units. That selecting may be executed in dependence of a preset or given combination of preset device types for or of the functional devices connected or to be connected to the connector units. The selected preset control scheme may also be referred to as used control scheme in order to differentiate it from the rest of the preset control schemes.

Advantages and advantageous embodiments of the described method correspond to the advantages and advantageous embodiments of the above-described routing device and modular routing system and routing device system.

The features and combinations of features described above, as well as the features and combinations of features disclosed in the figure description or the figures alone may not only be used alone or in the described combination, but also with other features or without some of the disclosed features without leaving the scope of the invention as defined by the claims. Consequently, embodiments that are not explicitly shown and described by the figures that can be generated by separately combined individual features disclosed in the figures are also part of the invention.

Exemplary embodiments are further described in the following by means of schematic drawings. Therein,
Figure 1 shows an exemplary embodiment of a routing device with three devices connected;
Figure 2 shows possible switching configurations of the valves of the embodiment of the routing device shown in figure 1;
Figure 3 shows the pumping and instrumentation diagrams of four different embodiments of respective pump units;
Figure 4 shows an exemplary embodiment of the routing device of figure 1 with a heat pump as first functional device and a solar system as third functional device; and
Figure 5 shows a pumping and instrumentation diagram of the routing device of figure 1 with a low-temperature heat load device as first functional device and a high-temperature heat load device as a third functional device.

In the figures, identical or functionally identical elements have the same reference signs.

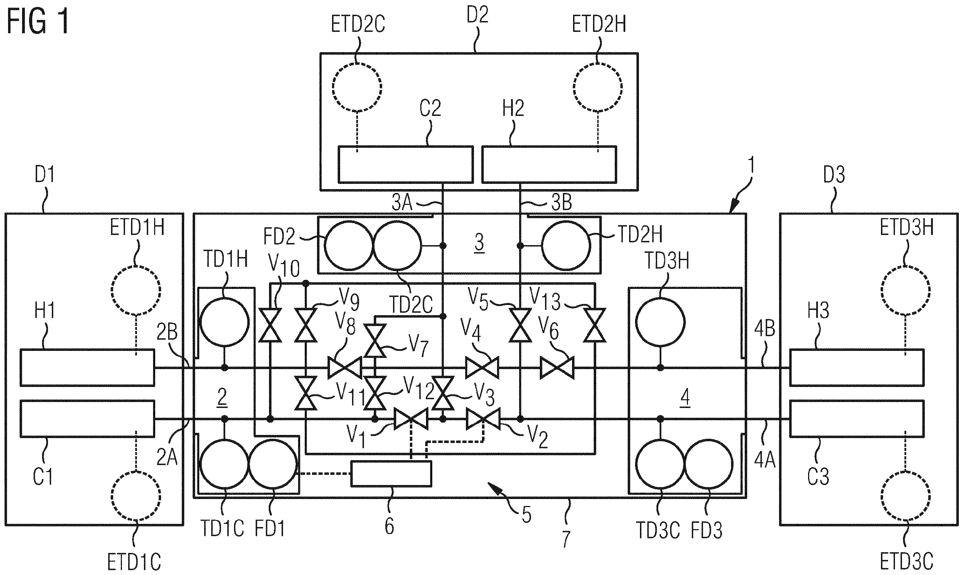

Figure 1 shows an exemplary embodiment of a routing device with three devices connected. The figure comprises a piping and instrumentation (PID) diagram of the routing device 1 for a configurable fluidic coupling of exactly three functional devices D1, D2, D3 which each comprise a respective heating and/or cooling circuit. The routing device 1 comprises exactly three connector units 2, 3, 4, a valve unit 5, and a control unit 6 as well as, in the present example, a housing 7. In the present example, both valve unit 5 as well as the control unit 6 are located inside the housing 7, where the connector units 2, 3, 4 are arranged at the housing 7. In the present example, all the connector units 2, 3, 4 and all the valves V1-V13 of the valve unit 5 as well as the below-mentioned sensors FD1, FD2, FD2, TD1C, TD1H, TD2C, TD2H, TD3C, TD3H are linked to the control unit 6. Nevertheless, for the sake of a clear arrangement, in Fig. 1, only the links between the control unit 6 and one exemplary connector unit 2 as well as two exemplary valves V1, V2 are shown.

Therein, the three connector units 2, 3, 4 are configured for connecting the three functional devices D1, D2, D3 to the routing device 1, where each of the connector units 2, 3, 4 comprises a respective inlet 2A, 3A, 4A and a respective outlet 2B, 3B, 4B for a fluidic coupling of the heating and/or cooling circuit of the respective functional device D1, D2, D3 connected (or, in more general terms: to be connected) to the routing device 1 with the valve unit 5 of the routing device 1. It has to be mentioned that each inlet may also function as an outlet, and each outlet may also function as an inlet in dependence of the flow direction of a heat transfer medium through the routing device 1 and the respective connector unit 2, 3, 4. So, the term "inlet" or "outlet" in this document may be considered as not imposing a restriction on the flow direction of said medium as each circuit point referred to as inlet 2A, 3A, 4A of a respective connector unit 2, 3, 4 may become the corresponding outlet 2B, 3B, 4B while the circuit point referred to as outlet 2B, 3B, 4B of said connector unit 2, 3, 4 will then become the corresponding inlet 2A, 3A, 4A. Hence, for the sake of simplicity, in the present schematic diagram, the inlets 2A, 3A, 4A may be considered as the circuit points that fluidically couple the valve unit 5 with the first, second, and third cold water reservoir or cold water space C1, C2, C3 of the first, the second, and the third functional device D1, D2, D3, respectively. Correspondingly, the outlets 2B, 3B, 4B designate the circuit points that fluidically couple the valve unit 5 to the first, second, and third hot water reservoir or hot water space H1, H2, H3 of the first, the second, and the third functional device D1, D2, D3, respectively.

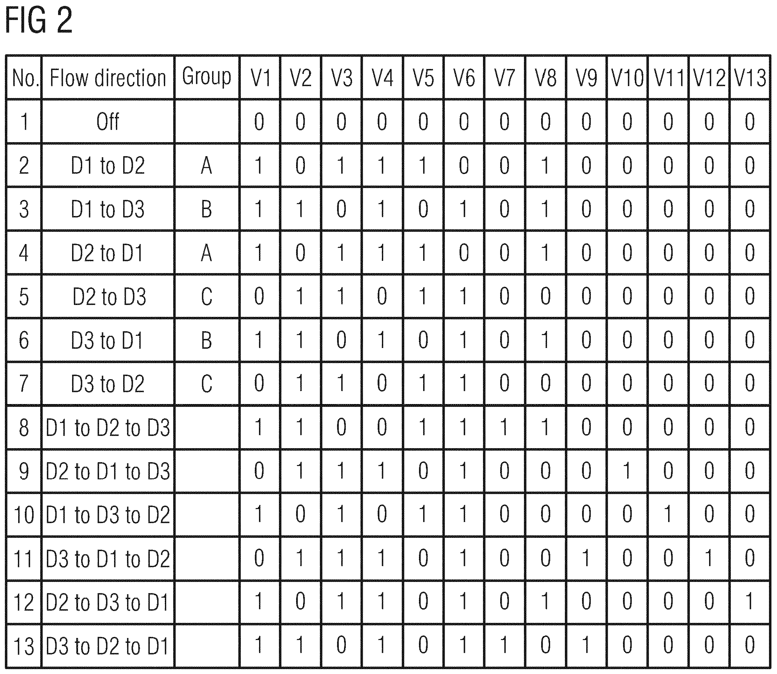

The valve unit 5 comprises a plurality of valves V1 to V13, that is, in the present example 13 valves, where, in the present example, all of them are two-way valves. The valve unit 5 is configured for a switchable fluidic coupling and/or decoupling of the inlet 2A, 3A, 3B of any of the connector units 2, 3, 4 with any of the inlets 2A, 3A, 4A and/or outlets 2B, 3B, 4B of the other connector units 2, 3, 4 and for a switchable fluidic coupling and/or decoupling of the outlet 2B, 3B, 4B of any of the connector units 2, 3, 4 with any of the inlets 2A, 3A, 4A and/or outlets 2B, 3B, 4B of the other connector units 2, 3, 4. An exemplary switching diagram to realise such a flexible coupling for the shown valve unit is shown in figure 2.

The control unit 6 is configured to switch the valves V1 to V13 of the valve unit 5 according to a preset control scheme. For the sake of clarity, in the shown PID, the control unit 6 is connected only to the valves V1 and V2. Nevertheless, respective control connections to the rest of the valves that are not shown exist. The control unit 6 is configured to hold or store at least one of several different interchangeable preset control schemes, where each preset control scheme is characterised by a scheme's specific combination of preset device types for the functional devices D1, D2, D3 connected (or to be connected) to the connector units 2, 3, 4. So, knowing to which device type the respective functional devices D1, D2, D3 belong, the switching of the valves V1 to V13 is accomplished according to the preset control scheme matching the actual combination of functional devices D1, D2, D3 connected (or to be connected) to the routing device 1. This allows the control unit 6 to achieve a desired behaviour of the overall system comprising the routing device 1 and the functional devices D1, D2, D3 in different scenarios with different combinations of functional devices D1, D2, D3 connected (or to be connected) to the routing device 1. Namely, as a suitable preset control scheme can be selected for the control unit, the same routing device 1 can be used with different combinations of functional devices D1, D2, D3. Preferably, the preset device types for the functional devices D1, D2, D3 comprise a heat source device type and a thermal storage device type and a heat load device type and, in particular, also a routing device type.

In the present example, the respective control schemes are dependent on sensory data provided by a number of internal sensors TD1C, TD1H, TD2C, TD2H, TD3C, TD3H and external sensors ETD1C, ETD2C, ETD3C, ETD1H, ETD2H, ETD3H. In the present example, each of the connector units 2, 3, 4 of the routing device 1 comprises an internal flow sensor FD1, FD2, FD3 for sensing a flow of a heat transfer or working medium through the respective connector unit 2, 3, 4. In addition, in the present example, each of the respective connector units 2, 3, 4 comprises two internal temperature sensors TD1C, TD1H, TD2C, TD2H, TD3C, TD3H for sensing a temperature of a working medium at the inlet 2A, 3A, 4A and the outlet 2B, 3B, 4B of the respective connector unit 2, 3, 4. In addition to said internal sensors TD1C, TD1H, TD2C, TD2H, TD3C, TD3H, in the present example, the respective functional devices D1, D2, D3 comprise sensors external to the routing device 1 for sensing a temperature of the respective cold spaces C1, C2, C3 and warm spaces H1, H2, H3. So, the first functional device D1 comprises a first external temperature sensor ETD1C for sensing the temperature of the cold space C1 of the first functional device and another external temperature sensor ETD1H for sensing the temperature of the hot space H1 of the first device D1. Correspondingly, second and third functional device D2, D3 comprise respective sensors ETD2C, ETD3C for sensing the temperature of the respective cold space C2, C3 and sensors ETD2H, ETD3H for sensing the temperature of the corresponding hot space H2, H3. The sensory data of the external sensors ETD1C, ETD2C, ETD3C, ETD1H, ETD2H, ETD3H may be transmitted to the control unit 6 via respective sensor interfaces of the connector units 2, 3, 4 that are not shown in figure 1.

So, with the identical routing device 1, the large variety of different devices D1, D2, D3 which may belong to different device types can be fluidically coupled in a switchable way that allows an optimal transfer and use of heat in a multitude of scenarios with many different situations.

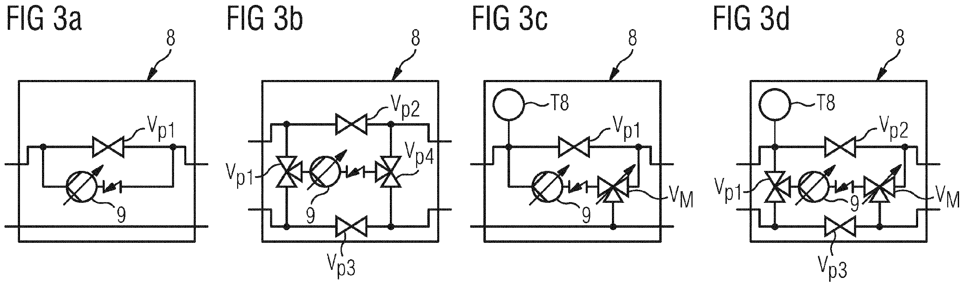

In figure 2, an overview is provided for the possible switching configurations of the valves of the valve unit according to different control schemes. Therein, 13 different ways of switching said 13 valves V1 to V13 are provided together with the respective flow direction for the heat transfer. For example, number 2 of the valve switching configurations gives the valve configuration for the examplary routing device of figure 1 which allows a heat transfer from the first functional device D1 to the second functional device D2 (or vice versa, see below or number 4 of the valve switching configurations). Therein, the valves V₁, V3, V4, V5 and V8 are open whereas the rest of the valves is closed. If no heat transfer is desired, all the valves are closed as shown by number 1 of the valve switching configurations. So, for each of the desired flow directions for the heat, figure 2 discloses the respective setting for the valves V1 to V13, where a 0 depicts a closed valve and a 1 symbolises an open valve. Therein, six switching configurations, switching configurations 2 to 7, are marked with respective letters, as the valves V1 to V13 are switched identical for a flow direction from, for instance D1 to D2 as from D2 to D1. Therein, the direction of the flow can be determined by the usage of corresponding pumps or pump units 8 (Figs. 3A, 3B, 3c, 3d). Similarly, the switching configurations number 3 and 6 as well as 5 and 7 are identical.

Figures 3A to 3d show the piping and instrumentation diagrams (PID) of exemplary pump units. Therein, in each of the figures, the respective pump unit 8 comprises a pump that can be bypassed by a corresponding switching of the valves V_{P1}, V_{P2}, V_{P3}, V_{P4}, V_{M} of the respective pump unit 8.

The PID of figure 3A corresponds to a simplex pump unit 8, which can operate either in a cold or hot side of a circuit. Such a pumping unit 8 is particularly suitable for a solar system without a tank or a heat recovery system as functional device attached to it.

In figure 3B, the PID of a dual pump unit 8 is shown. Such a dual pump unit 8 can operate in the cold and the hot side of a corresponding heating and/or cooling circuit and can perform a closed loop pumping with the attached functional device by shortcircuiting hot and cold side. Such a pumping unit 8 is particularly suitable for a heat pump with domestic hot water tank or other heat storage device embedded, a solar system with an embedded water tank, or a thermal storage device as functional device attached to the dual pump unit 8.

The figure 3c shows an exemplary PID of a thermal pump unit 8, which can operate in the cold or hot side of a corresponding heating and/or cooling cycle. Due to an integrated temperature sensor T8 and a connection between cold and hot side via a three-way valve V_{M}, thermal regulation can be achieved by the thermal pump unit 8. Furthermore, similar to the dual pump unit 8 of figure 3B, the thermal pump unit 8 can perform a closed loop pumping with the connected functional device. Such a thermal pump unit 8 is particularly suitable for a space heating unit or space cooling unit as functional device as well as a unidirectional district heating heat exchanger as (or comprised in the) functional device.

In figure 3d, the PID of a thermal dual pump unit 8 is shown. Such a thermal dual pump unit 8 can operate in the cold and hot side of a cooling and/or heating circuit as its pump 9 may be integrated in either the cold or the hot side by the switching of the valves V_{P1}, Vₚ₂, Vₚ₃ and V_{M}. As the thermal pump unit 8 of figure 3c, such a thermal dual pump unit 8 can perform thermal regulation and also closed loop pumping. The thermal dual pump unit 8 is particularly suitable for space heating and/or cooling devices as well as for a bidirectional district heating heat exchanger interface as functional device.

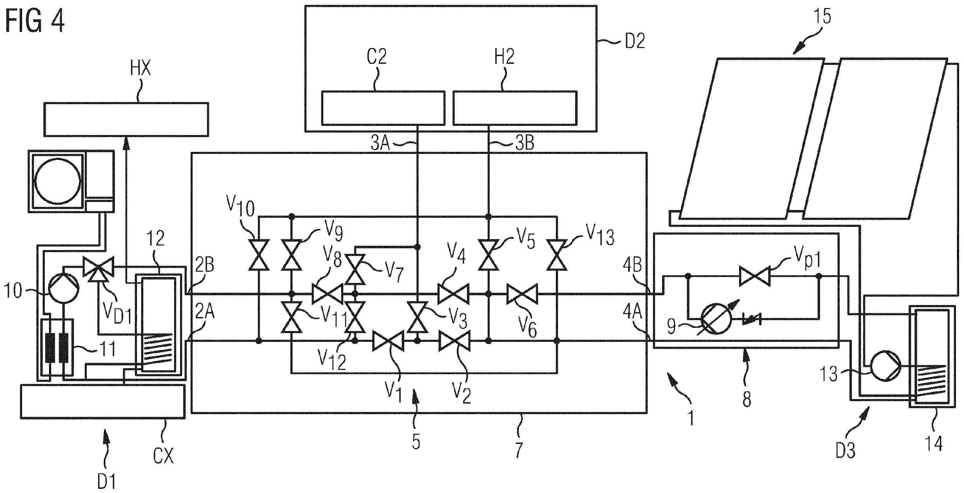

In figure 4, an exemplary setup of a routing device system with the routing device of figure 1 which, in the present case, includes a pump unit 8, which is a simplex pump unit here, and three functional devices D1, D2, D3. For the sake of clarity, the external and internal sensors as well as control unit 6 are not shown in figure 4.

The first functional device D1 is a heat pump device in the present example, where the heat pump device comprises a pump 10 which is connected in series to a heat exchanger 11, a tank, which is a heat buffer, 12 which can be used to heat cold water from a cold space CX and feed the heated water in a hot space HX. The heat pump also comprises a three-way valve VD1 which allows to fluidically couple either pump 10 and heat exchanger 11 or tank 12 with the outlet 2B of the routing device 1.

The second functional device D2 may be any device with a cold water space C2 and hot water space H2, where the cold water space C2 is coupled to the inlet 3A and the hot water space H2 is coupled to the outlet 3B.

The third functional device D3 in the present example is a solar system with a solar thermal panel 15 which is used to heat water inside a water tank 14. Therein, a pump 13 supports the process in the present example. The water tank 14 is connected to the inlet 4A and outlet 4B via the pump unit 8. Alternatively to the shown setup, also a solar thermal system without a tank 14 may be directly plugged in to the routing device 1 with a simplex pump unit 8. This, however, requires the use of glycol in the complete hydronic circuit. Another alternative would be a solar thermal system as third functional device D3 without cylinder or tank 14 with a heat exchanger that is fluidically coupled to the routing device 1. In this case, two pumps are required, one before and one after the heat exchanger.

Such a set up allows for a specifically variable and efficient operating of the functional devices D1, D2, D3 as explained in the following.

For example, if the thermal energy load is high, the routing device 1 may use the heat pump to preheat and a solar thermal buffer to reach the set temperature, hence operate first and third device D1, D3 in a serial mode, that is connect first functional device D1 and third functional device D3 in series. This may be achieved by opening V1, V3, V5, V6, and V11 of the routing device 1 and closing the rest of the valves V2, V4, V7, V8, V9, V10, V12, V13, Vₚ₁. The three-way valve VD1 will then be set to connect pump 10 and heat exchanger 11 to the outlet 2B. In this heating mode, the heat pump will operate a high efficiency because of the low temperature heat pump set point.

In case of a solar system without a buffer or tank 14, the routing device 1 may use the third functional device D3, the solar system, as pre-heater only. Or, when the buffer implemented by the tank 14 is depleted, heat pump and solar system may swap their role. Then, for instance, the valves V2, V3, V4, V6, V9 and V12 may be open and the valves V1, V5, V7, V8, V10, V11, and V13 may be closed. Vₚ₁ and VD1 remain unchanged here. Then, the routing device 1 enables a high temperature for example for space heating by the second functional device D2 even with only a single stage heat pump as first functional device D1. Alternatively, space heating can be performed via the solar system only or the pump only when the valves of the valve unit 5 are set accordingly.

In another setting, the routing device 1 may even be used to produce hot domestic water via the third functional device D3, that is the solar system, that is, transport the water from CX to HX while transferring heat to the water. To this end, only the three-way valve VD1 as well as eventually some software of the heat pump as first functional device D1 needs to be adapted. Then, the hot domestic water may be produced by the solar system if one condition, preferably two conditions are met. Firstly, solar energy needs to be available in the tank 14, preferable with a temperature between 15 and 99° C. Secondly, the tank 12 connected to the heat pump shall advantageously be depleted so that heat can be transferred from the third functional device D3, the solar system, to the tank 12. Then, by opening the valves V1, V2, V4, V6, V8 and closing the valves V3, V5, V7, V9, V10, V11, V12, V13, and V_{P1}, the first functional device D1 and the third functional device D3 can be short-circuited, and with the valve VD1 being set to connect the tank 12 with the outlets 2B, heat is transferred from the solar system to the tank 12. Consequently, thermal energy is transferred from the solar system to the domestic hot water production tanks 12.

Furthermore, the tank 14 of the solar system may be used as a buffer if, for instance, solar energy is not available and the buffer tank 12 of the heat pump is fully charged. Preferably, the ambient temperature exceeds a lower limit, for instance 10° C and, for instance, a storage level for the stored heat is set to a high level. Then, with the valves V1, V2, V4, V6, V8 open and the rest of the valves of the valve unit 5 closed, the valve Vₚ₁ open and the three-way valve VD1 set to connect the heat exchanger 11 and the heat pump 10 to the outlet 2B, the thermal energy provided by the heat pump is transferred to the third functional device D3 and stored in the tank 14.

Furthermore, the routing device 1 makes installation retrofit possible. For instance, a dwelling already equipped with a heat pump providing the domestic hot water and space heating can be retrofitted by adding a solar thermal panel as third functional device D3 to provide both domestic hot water and space heating as described above. Also, a dwelling already equipped with a solar panel system for domestic hot water production can be retrofitted with a heat pump as third functional device D3.

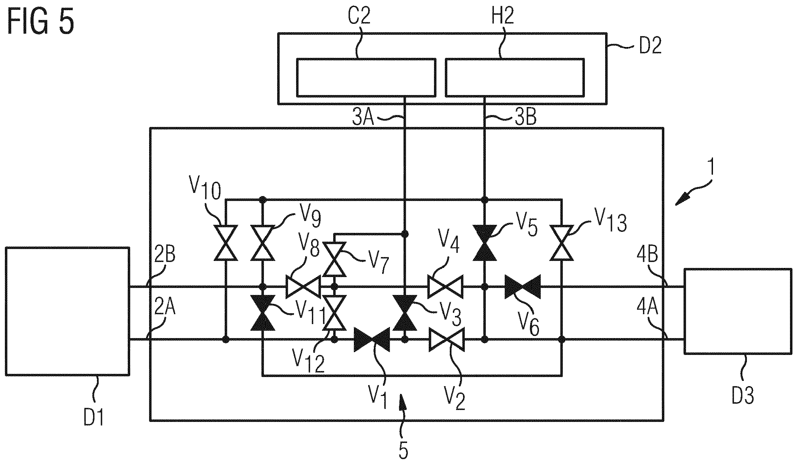

In figure 5, the routing device of figure 1 is shown with a low temperature emitter such as an underfloor heating as first functional device D1 and a high temperature emitter as third functional device D3. In this case, the second functional device D2 is a heat source device with a cold water space C2 and a hot water space H2. Similar to the piping and instrumentation diagram shown in figure 4, sensors as well as connector units 2, 3, 4 are not explicitly depicted in figure 5 for the sake of simplicity. The routing device 1 makes the operating of different types of emitter more efficient as explained in the following.

When operating in the same time high and low temperature emmiters shown in figure 5, in the state of the art exergy can be lost when the cold water space C2 and the hot water space H2 are short-circuited for providing the lower temperature as a mixture of hot and cold water in the usually employed mixing valves. The routing device 1 on the other hand can increase exergy recovery by supplying heat to the two functional devices D1, D3 that is, the two heaters, in serial. So, when the valves V1, V3, V5, V6 and V11 are open and the valves V2, V4, V7, V8, V9, V10, V12 and V13 are closed, heat can be transferred from the hot water space H2 to the high temperature emitter as third functional device D3 via the outlet 4B and then, from the inlet 4A to the outlet 2B and to the first functional device D1. From there, the cold water with the remaining heat is transferred via the inlet 2A to the cold water space C2 by passing the open valves V1 and V3.

The described examples show how already a very limited set of exactly three functional devices D1,D2, D3 with the identical routing device 1 leads to an energy efficient usage of heat in a variety of different ways.

## Claims

1. Routing device (1) for a configurable fluidic coupling of exactly three functional devices (D1, D2, D3) which each comprise a respective heating and/or cooling circuit, with
- three connector units (2, 3, 4) for connecting the three functional devices (D1, D2, D3) to the routing device (1), where each of the connector units (2, 3, 4) comprises an inlet (2A, 3A, 4A) and an outlet (2B, 3B, 4B) for a fluidic coupling of the heating and/or cooling circuit of the respective functional device (D1, D2, D3) with a valve unit (5) of the routing device (1);
- the valve unit (5) with a plurality of valves (V1-V13); and
- a control unit (6) configured to switch the valves (V1-V13) of the valve unit (5) according to a preset control scheme;
**characterized in that**
- the routing device comprises exactly three connector units (2, 3, 4);
- the valve unit (5) is configured for a switchable fluidic coupling of the inlet (2A, 3A, 4A) of any of the connector units (2, 3, 4) with any of the inlets (2A, 3A, 4A) and/or outlets (2B, 3B, 4B) of the other connector units (2, 3, 4) and for a switchable fluidic coupling of the outlet (2B, 3B, 4B) of any of the connector units (2, 3, 4) with any of the inlets (2A, 3A, 4A) and/or outlets (2B, 3B, 4B) of the other connector units (2, 3, 4); and **in that**
- the control unit (6) is configured to hold at least one of several different interchangeable preset control schemes, where each preset control scheme is **characterized by** a scheme-specific combination of preset device-types for the exactly three functional devices (D1, D2, D3) to be connected to the exactly three connector units (2, 3, 4).

2. Routing device (1) according to claim 1,
**characterized in that**
the preset device-types for the functional devices (D1, D2, D3) comprise a heat source device type and/or a thermal storage device type and/or a heat load device type and/or a routing device (1) type.

3. Routing device (1) according to any of the preceding claims, **characterized in that**
the valves (V1-V13) of the plurality of valves (V1-V13) are all two-way valves.

4. Routing device (1) according to any of the preceding claims, **characterized in that**
at least two of the connector units (2, 3, 4), preferably any two of the connector units (2, 3, 4), can be switched to be coupled in series by the valve unit (5) or at least two of the connector units (2, 3, 4), preferably any two of the connector units (2, 3, 4), can switched to be either coupled in series or in parallel by the valve unit (5).

5. Routing device (1) according to any of the preceding claims, **characterized in that**
- at least one of the connector units (2, 3, 4), preferably two or three of the connector units (2, 3, 4), comprise at least one sensor (FD1, FD2, FD3, TD1C, TD1H, TD2C, TD2H, TD3C, TD3H) and/or at least one sensor interface to be connected to a sensor (ETD1C, ETD1H, ETD2C, ETD2H, ETD3C, ETD3H) of the respective functional device (D1, D2, D3), where the sensor (FD1, FD2, FD3, TD1C, TD1H, TD2C, TD2H, TD3C, TD3H) and/or sensor interface is configured to provide sensory data; and
- the preset control schemes of the control unit (6) are dependent on the sensory data.

6. Routing device (1) according to claim 5,
**characterized in that**
the at least one sensor (FD1, FD2, FD3, TD1C, TD1H, TD2C, TD2H, TD3C, TD3H) comprises a temperature sensor (TD1C, TD2C, TD3C) for sensing a temperature of a medium at the inlet (2A, 3A, 4A) of the respective connector unit (2, 3, 4) and/or a temperature sensor (TD1H, TD2H, TD3H) for sensing a temperature of a medium at the outlet (2B, 3B, 4B) of the respective connector unit (2, 3, 4) and/or a flow sensor (FD1, FD2, FD3) for sensing a flow of a medium at the inlet (2A, 3A, 4A) or the outlet (2B, 3B, 4B) of the respective connector unit (2, 3, 4).

7. Routing device (1) according to any of the preceding claims, **characterized in that**
the routing device (1) has a housing (7) in which the valve unit (5) is arranged, where, preferably, the connector units (2, 3, 4) are arranged on the housing (7) and/or the control unit (6) is arranged in the housing (7).

8. Routing device (1) according to any of the preceding claims, **characterized in that**
the routing device (1) comprises one or more pump units (8) to regulate a flow rate, where each pump unit (8) is preferably part of or connected to one of the connector units (2, 3, 4).

9. Routing device (1) according to any of the preceding claims, **characterized in that**
- values of at least one additional parameter can be set in the control unit (6) and/or retrieved by the control unit (6), where the at least one additional parameter comprises one or more of the following parameters: a lower temperature limit of at least one of the functional devices (D1, D2, D3); an upper temperature limit of at least one of the functional devices (D1, D2, D3); a lower flow limit of at least one of the functional devices (D1, D2, D3); an upper flow limit of at least one of the functional devices (D1, D2, D3); a safety high temperature limit for a medium; a safety low temperature limit for the medium; a minimal temperature currently available for the medium in at least one of the functional devices (D1, D2, D3); a maximal temperature currently available for the medium in at least one of the functional devices (D1, D2, D3); a current availability of at least one of the functional devices (D1, D2, D3); a current availability of a heating and/or cooling function of at least one of the functional devices (D1, D2, D3); an upper flow limit for at least one of the functional devices (D1, D2, D3); a lower flow limit for at least one of the functional devices (D1, D2, D3); a currently available flow of the medium through at least one of the functional devices (D1, D2, D3); a specification of at least one of the functional devices (D1, D2, D3), in particular of a thermal storage device type functional device (D1, D2, D3) and/or of a heat source device type functional device (D1, D2, D3), where the specification may comprise: a type index indicating if the thermal storage comprises a domestic water storage and/or a phase change material and/or a district heating system and/or indicating if the heat source device comprises a renewable source and/or a biomass source and/or a hybrid renewable source and/or a fossil source; and/or indicating a capacity of the thermal storage device; and/or indicating a phase change temperature of the phase change material; and/or indicating a temperature difference between the phase change temperature of the phase change material and the temperature of a medium in the thermal storage; and/or indicating a latent capacity of the phase change material; and
- the preset control scheme of the control unit (6) is dependent on the parameter values.

10. Routing device (1) according to any of the preceding claims, **characterized in that**,
in a case where the preset control scheme is **characterized by** two of the functional devices (D1, D2, D3) connected to or to be connected to the routing device (1) being a heat source device or thermal storage device, the control unit (6) is configured to priorise the functional devices (D1, D2, D3), in particular in dependence upon a normalized exergy of the respective functional devices (D1, D2, D3), and to adapt the control scheme such that in operation of the routing device (1) heat is provided to the remaining functional device (D1, D2, D3) from either only one or two of the first two functional devices (D1, D2, D3) in dependence upon a result of the priorisation.

11. Routing device (1) according to any of the preceding claims, **characterized in that**,
in a case where the preset control scheme is **characterized by** two of the functional devices (D1, D2, D3) connected to or to be connected to the routing device (1) being a heat load device or thermal storage device, the control unit (6) is configured to priorise the functional devices (D1, D2, D3), in particular in dependence upon a maximum value of an required input temperature, and to adapt the control scheme such that in operation of the routing device (1) the two functional devices (D1, D2, D3) are coupled in series and in particular heat is provided to the functional device (D1, D2, D3) with the lower maximum value via the functional device (D1, D2, D3) with the higher maximum value.

12. Routing device (1) according to any of the preceding claims, **characterized in that**
the control scheme can be adapted by the control unit (6) according to different operating modes, where, in particular, the operating modes comprise one or more of the following operating modes: domestic hot water providing mode and/or heating mode and/or storing mode and/or energy management mode.

13. Modular routing system with two or more routing devices (1) according to any of the preceding claims connected to each other via one of the respective connection units (2, 3, 4).

14. Modular routing system according to claim 13,
**characterized by**
- a subordinate first routing device (1) wherein the preset control scheme is **characterized by** at least one, preferably two of the connector units (2, 3, 4) to be connected to a heat source device as functional device (D1, D2, D3) and one connector unit (2, 3, 4) to be connected to a superordinate routing device (1); and/or
- a subordinate second routing device (1) wherein the preset control scheme is **characterized by** at least one, preferably two of the connector units (2, 3, 4) to be connected to a thermal storage device as functional device (D1, D2, D3) and one connector unit (2, 3, 4) to be connected to the superordinate routing device (1); and/or
- a subordinate third routing device (1) wherein the preset control scheme is **characterized by** two of the connector units (2, 3, 4) to be connected to a heat load device as functional device (D1, D2, D3) and one connector unit (2, 3, 4) to be connected to the superordinate routing device (1); and
- the superordinate routing device (1) wherein the preset control scheme is **characterized by** at least one of the connector units (2, 3, 4) to be connected to one of the subordinate routing devices (1), in particular **characterized by** two of the connector units (2, 3, 4) each to be connected to one respective subordinate routing device (1) of the subordinate routing devices (1) or **characterized by** three connector units (2, 3, 4) each to be connected to one respective subordinate routing device (1) of the subordinate routing devices (1).

15. Method for operating a routing device (1), where the routing device (1) is designed for a configurable fluidic coupling of exactly three functional devices (D1, D2, D3) which each comprise a respective heating and/or cooling circuit, with the routing device (1) comprising:
- exactly three connector units (2, 3, 4) for connecting the exactly three functional devices (D1, D2, D3) to the routing device (1), where each of the connector units (2, 3, 4) comprises an inlet (2A, 3A, 4A) and an outlet (2B, 3B, 4B) for a fluidic coupling of the heating and/or cooling circuit of the respective connected functional device (D1, D2, D3) with a valve unit (5) of the routing device (1);
- the valve unit (5) with a plurality of valves (V1-V13), where the valve unit (5) is configured for a switchable fluidic coupling of the inlet (2A, 3A, 4A) of any of the connector units (2, 3, 4) with any of the inlets (2A, 3A, 4A) and/or outlets (2B, 3B, 4B) of the other connector units (2, 3, 4) and for a switchable fluidic coupling of the outlet (2B, 3B, 4B) of any of the connector units (2, 3, 4) with any of the inlets (2A, 3A, 4A) and/or outlets (2B, 3B, 4B) of the other connector units (2, 3, 4); and
- a control unit (6) to switch the valves (V1-V13) of the valve unit (5) according to a preset control scheme;
**characterized by** the method step of
- selecting one of several different interchangeable preset control schemes for the control unit (6), where each preset control scheme is **characterized by** a scheme-specific combination of preset device-types for the exactly three functional devices (D1, D2, D3) to be connected to the exactly three connector units (2, 3, 4).

## Patentansprüche

1. Leiteinrichtung (1) für eine konfigurierbare fluidische Kopplung von genau drei Funktionseinrichtungen (D1, D2, D3), die jeweils einen entsprechenden Erwärmungs- und/oder Kühlungskreislauf umfassen, mit
- drei Verbindungseinheiten (2, 3, 4) zum Verbinden der drei Funktionseinrichtungen (D1, D2, D3) mit der Leiteinrichtung (1), wo jede der Verbindungseinheiten (2, 3, 4) einen Einlass (2A, 3A, 4A) und einen Auslass (2B, 3B, 4B) für eine fluidische Kopplung des Erwärmungs- und/oder Kühlungskreislaufs der jeweiligen Funktionseinrichtung (D1, D2, D3) mit einer Ventileinheit (5) der Leiteinrichtung (1) umfasst;
- der Ventileinheit (5) mit einer Vielzahl von Ventilen (V1-V13); und
- einer Steuereinheit (6), die eingerichtet ist, die Ventile (V1-V13) der Ventileinheit (5) gemäß einem voreingestellten Steuerschema zu schalten;
**dadurch gekennzeichnet, dass**
- die Leiteinrichtung genau drei Verbindungseinheiten (2, 3, 4) umfasst;
- die Ventileinheit (5) für eine schaltbare fluidische Kopplung des Einlasses (2A, 3A, 4A) von jeglicher der Verbindungseinheiten (2, 3, 4) mit jeglichem der Einlässe (2A, 3A, 4A) und/oder Auslässe (2B, 3B, 4B) der anderen Verbindungseinheiten (2, 3, 4) und für eine schaltbare fluidische Kopplung des Auslasses (2B, 3B, 4B) von jeglicher der Verbindungseinheiten (2, 3, 4) mit jeglichem der Einlässe (2A, 3A, 4A) und/oder Auslässe (2B, 3B, 4B) der anderen Verbindungseinheiten (2, 3, 4) eingerichtet ist;
und dadurch, dass
- die Steuereinheit (6) eingerichtet ist, zumindest eines von mehreren verschiedenen austauschbaren voreingestellten Steuerschemata zu halten, wo jedes voreingestellte Steuerschema **gekennzeichnet ist durch** eine schemaspezifische Kombination von voreingestellten Einrichtungstypen für die genau drei Funktionseinrichtungen (D1, D2, D3), die mit den genau drei Verbindungseinheiten (2, 3, 4) zu verbinden sind.

2. Leiteinrichtung (1) nach Anspruch 1,
**dadurch gekennzeichnet, dass**
die voreingestellten Einrichtungstypen für die Funktionseinrichtungen (D1, D2, D3) einen Wärmequelle-Einrichtungstyp und/oder einen Wärmespeicherung-Einrichtungstyp und/oder einen Wärmelast-Einrichtungstyp und/oder einen Leiteinrichtung-(1)-Typ umfassen.

3. Leiteinrichtung (1) nach einem der vorhergehenden Ansprüche,
**dadurch gekennzeichnet, dass**
die Ventile (V1-V13) der Vielzahl von Ventilen (V1-V13) alle Zweiwegeventile sind.

4. Leiteinrichtung (1) nach einem der vorhergehenden Ansprüche,
**dadurch gekennzeichnet, dass**
zumindest zwei der Verbindungseinheiten (2, 3, 4), vorzugsweise zwei beliebige der Verbindungseinheiten (2, 3, 4), geschaltet werden können, um durch die Ventileinheit (5) in Reihe gekoppelt zu werden, oder zumindest zwei der Verbindungseinheiten (2, 3, 4), vorzugsweise zwei beliebige der Verbindungseinheiten (2, 3, 4), geschaltet werden können, um durch die Ventileinheit (5) entweder in Reihe oder parallel gekoppelt zu werden.

5. Leiteinrichtung (1) nach einem der vorhergehenden Ansprüche,
**dadurch gekennzeichnet, dass**
- zumindest eine der Verbindungseinheiten (2, 3, 4), vorzugsweise zwei oder drei der Verbindungseinheiten (2, 3, 4), zumindest einen Sensor (FD1, FD2, FD3, TD1C, TD1H, TD2C, TD2H, TD3C, TD3H) und/oder zumindest eine Sensorschnittstelle zum Verbinden mit einem Sensor (ETD1C, ETD1H, ETD2C, ETD2H, ETD3C, ETD3H) der jeweiligen Funktionseinrichtung (D1, D2, D3) umfassen, wo der Sensor (FD1, FD2, FD3, TD1C, TD1H, TD2C, TD2H, TD3C, TD3H) und/oder die Sensorschnittstelle eingerichtet ist, sensorische Daten bereitzustellen; und
- die voreingestellten Steuerschemata der Steuereinheit (6) von den sensorischen Daten abhängig sind.

6. Leiteinrichtung (1) nach Anspruch 5,
**dadurch gekennzeichnet, dass**
der zumindest eine Sensor (FD1, FD2, FD3, TD1C, TD1H, TD2C, TD2H, TD3C, TD3H) einen Temperatursensor (TD1C, TD2C, TD3C) zum Erfassen einer Temperatur eines Mediums am Einlass (2A, 3A, 4A) der jeweiligen Verbindungseinheit (2, 3, 4) und/oder einen Temperatursensor (TD1H, TD2H, TD3H) zum Erfassen einer Temperatur eines Mediums am Auslass (2B, 3B, 4B) der jeweiligen Verbindungseinheit (2, 3, 4) und/oder einen Strömungssensor (FD1, FD2, FD3) zum Erfassen einer Strömung eines Mediums am Einlass (2A, 3A, 4A) oder dem Auslass (2B, 3B, 4B) der jeweiligen Verbindungseinheit (2, 3, 4) umfasst.

7. Leiteinrichtung (1) nach einem der vorhergehenden Ansprüche,
**dadurch gekennzeichnet, dass**
die Leiteinrichtung (1) ein Gehäuse (7) aufweist, in dem die Ventileinheit (5) angeordnet ist, wo vorzugsweise die Verbindungseinheiten (2, 3, 4) am Gehäuse (7) angeordnet sind und/oder die Steuereinheit (6) im Gehäuse (7) angeordnet ist.

8. Leiteinrichtung (1) nach einem der vorhergehenden Ansprüche,
**dadurch gekennzeichnet, dass**
die Leiteinrichtung (1) eine oder mehrere Pumpeneinheiten (8) umfasst, um eine Strömungsrate zu regulieren, wo jede Pumpeneinheit (8) vorzugsweise Teil von oder verbunden mit einer der Verbindungseinheiten (2, 3, 4) ist.

9. Leiteinrichtung (1) nach einem der vorhergehenden Ansprüche,
**dadurch gekennzeichnet, dass**
- Werte von zumindest einem Parameter in der Steuereinheit (6) eingestellt und/oder durch die Steuereinheit (6) abgerufen werden können, wo der zumindest eine zusätzliche Parameter einen oder mehrere der folgenden Parameter umfasst: eine untere Temperaturgrenze von zumindest einer der Funktionseinrichtungen (D1, D2, D3); eine obere Temperaturgrenze von zumindest einer der Funktionseinrichtungen (D1, D2, D3); eine untere Strömungsgrenze von zumindest einer der Funktionseinrichtungen (D1, D2, D3); eine obere Strömungsgrenze von zumindest einer der Funktionseinrichtungen (D1, D2, D3); eine Sicherheitshochtemperaturgrenze für ein Medium; eine Sicherheitsniedertemperaturgrenze für das Medium; eine minimale Temperatur, die aktuell für das Medium in zumindest einer der Funktionseinrichtungen (D1, D2, D3) verfügbar ist; eine maximale Temperatur, die aktuell für das Medium in zumindest einer der Funktionseinrichtungen (D1, D2, D3) verfügbar ist; eine aktuelle Verfügbarkeit von zumindest einer der Funktionseinrichtungen (D1, D2, D3); eine aktuelle Verfügbarkeit einer Erwärmungs- und/oder Kühlungsfunktion von zumindest einer der Funktionseinrichtungen (D1, D2, D3); eine obere Strömungsgrenze für zumindest eine der Funktionseinrichtungen (D1, D2, D3); eine untere Strömungsgrenze für zumindest eine der Funktionseinrichtungen (D1, D2, D3); eine aktuell verfügbare Strömung des Mediums durch zumindest eine der Funktionseinrichtungen (D1, D2, D3); eine Spezifikation von zumindest einer der Funktionseinrichtungen (D1, D2, D3), insbesondere einer Wärmespeicher-Einrichtungstyp-Funktionseinrichtung (D1, D2, D3) und/oder einer Wärmequelle-Einrichtungstyp-Funktionseinrichtung (D1, D2, D3), wo die Spezifikation umfassen kann: einen Typenindex, der anzeigt, falls der Wärmespeicher einen Brauchwasserspeicher und/oder ein Phasenwechselmaterial und/oder ein Fernwärmesystem umfasst und/oder anzeigt, falls die Wärmequelleneinrichtung eine erneuerbare Quelle und/oder eine Biomassequelle und/oder eine hybride erneuerbare Quelle und/oder eine fossile Quelle umfasst; und/oder eine Kapazität der Wärmespeichereinrichtung anzeigt; und/oder eine Phasenwechseltemperatur des Phasenwechselmaterials anzeigt; und/oder eine Temperaturdifferenz zwischen der Phasenwechseltemperatur des Phasenwechselmaterials und der Temperatur eines Mediums im Wärmespeicher anzeigt; und/oder eine latente Kapazität des Phasenwechselmaterials anzeigt; und
- das voreingestellte Steuerschema der Steuereinheit (6) von den Parameterwerten abhängig ist.

10. Leiteinrichtung (1) nach einem der vorhergehenden Ansprüche,
**dadurch gekennzeichnet, dass**
in einem Fall, in dem das voreingestellte Steuerschema durch zwei der Funktionseinrichtungen (D1, D2, D3) gekennzeichnet ist, die mit der Leiteinrichtung (1) verbunden sind oder verbunden werden sollen, die eine Wärmequelleneinrichtung oder eine Wärmespeichereinrichtung sind, die Steuereinheit (6) eingerichtet ist, die Funktionseinrichtungen (D1, D2, D3) zu priorisieren, insbesondere in Abhängigkeit von einer normierten Exergie der jeweiligen Funktionseinrichtungen (D1, D2, D3), und das Steuerschema so anzupassen, dass im Betrieb der Leiteinrichtung (1) Wärme von nur einer oder zwei der ersten beiden Funktionseinrichtungen (D1, D2, D3) in Abhängigkeit von einem Ergebnis der Priorisierung an die verbleibende Funktionseinrichtung (D1, D2, D3) bereitgestellt wird.

11. Leiteinrichtung (1) nach einem der vorhergehenden Ansprüche,
**dadurch gekennzeichnet, dass**
in einem Fall, in dem das voreingestellte Steuerschema durch zwei der Funktionseinrichtungen (D1, D2, D3) gekennzeichnet ist, die mit der Leiteinrichtung (1) verbunden sind oder verbunden werden sollen, die eine Wärmelasteinrichtung oder eine Wärmespeichereinrichtung sind, die Steuereinheit (6) eingerichtet ist, die Funktionseinrichtungen (D1, D2, D3) zu priorisieren, insbesondere in Abhängigkeit von einem Maximalwert einer erforderlichen Eingabetemperatur, und das Steuerschema so anzupassen, dass im Betrieb der Leiteinrichtung (1) die zwei Funktionseinrichtungen (D1, D2, D3) in Reihe gekoppelt sind und insbesondere Wärme an die Funktionseinrichtung (D1, D2, D3) mit dem niedrigeren Maximalwert über die Funktionseinrichtung (D1, D2, D3) mit dem höheren Maximalwert bereitgestellt wird.

12. Leiteinrichtung (1) nach einem der vorhergehenden Ansprüche,
**dadurch gekennzeichnet, dass**
das Steuerschema durch die Steuereinheit (6) gemäß verschiedener Betriebsmodi angepasst werden kann, wo insbesondere die Betriebsmodi eine oder mehrere der folgenden Betriebsmodi umfassen: Brauchwarmwasserbereitungsmodus und/oder Erwärmungsmodus und/oder Speichermodus und/oder Energieverwaltungsmodus.

13. Modulares Leitsystem mit zwei oder mehr Leiteinrichtungen (1) nach einem der vorhergehenden Ansprüche, die miteinander über eine der entsprechenden Verbindungseinheiten (2, 3, 4) verbunden sind.

14. Modulares Leitsystem nach Anspruch 13,
**gekennzeichnet durch**
- eine untergeordnete erste Leiteinrichtung (1), wobei das voreingestellte Steuerschema **gekennzeichnet ist durch** zumindest eine, vorzugsweise zwei, der Verbindungseinheiten (2, 3, 4), die mit einer Wärmequelleneinrichtung als Funktionseinrichtung (D1, D2, D3) verbunden werden sollen, und eine Verbindungseinheit (2, 3, 4), die mit einer übergeordneten Leiteinrichtung (1) verbunden werden soll; und/oder
- eine untergeordnete zweite Leiteinrichtung (1), wobei das voreingestellte Steuerschema **gekennzeichnet ist durch** zumindest eine, vorzugsweise zwei, der Verbindungseinheiten (2, 3, 4), die mit einer Wärmespeichereinrichtung als Funktionseinrichtung (D1, D2, D3) verbunden werden sollen, und eine Verbindungseinheit (2, 3, 4), die mit der übergeordneten Leiteinrichtung (1) verbunden werden soll; und/oder
- eine untergeordnete dritte Leiteinrichtung (1), wobei das voreingestellte Steuerschema **gekennzeichnet ist durch** zwei der Verbindungseinheiten (2, 3, 4), die mit einer Wärmelasteinrichtung als Funktionseinrichtung (D1, D2, D3) verbunden werden sollen, und eine Verbindungseinheit (2, 3, 4), die mit der übergeordneten Leiteinrichtung (1) verbunden werden soll; und
- die übergeordnete Leiteinrichtung (1), wobei das voreingestellte Steuerschema **gekennzeichnet ist durch** zumindest eine der Verbindungseinheiten (2, 3, 4), die mit einer der untergeordneten Leiteinrichtungen (1) verbunden werden soll, insbesondere **gekennzeichnet durch** zwei der Verbindungseinheiten (2, 3, 4), die jeweils mit einer entsprechenden untergeordneten Leiteinrichtung (1) der untergeordneten Leiteinrichtungen (1) verbunden werden sollen oder **gekennzeichnet durch** drei Verbindungseinheiten (2, 3, 4), die jeweils mit einer entsprechenden untergeordneten Leiteinrichtung (1) der untergeordneten Leiteinrichtungen (1) verbunden werden sollen.

15. Verfahren zum Betreiben einer Leiteinrichtung (1), wo die Leiteinrichtung (1) für eine konfigurierbare fluidische Kopplung von genau drei Funktionseinrichtungen (D1, D2, D3) ausgelegt ist, die jeweils einen entsprechenden Erwärmungs- und/oder Kühlungskreislauf umfassen, wobei die Leiteinrichtung (1) umfasst:
- genau drei Verbindungseinheiten (2, 3, 4) zum Verbinden der genau drei Funktionseinrichtungen (D1, D2, D3) mit der Leiteinrichtung (1), wo jede der Verbindungseinheiten (2, 3, 4) einen Einlass (2A, 3A, 4A) und einen Auslass (2B, 3B, 4B) für eine fluidische Kopplung des Erwärmungs- und/oder Kühlungskreislaufs der jeweils verbundenen Funktionseinrichtung (D1, D2, D3) mit einer Ventileinheit (5) der Leiteinrichtung (1) umfasst;
- die Ventileinheit (5) mit einer Vielzahl von Ventilen (V1-V13), wo die Ventileinheit (5) für eine schaltbare fluidische Kopplung des Einlasses (2A, 3A, 4A) von jeglicher der Verbindungseinheiten (2, 3, 4) mit jeglichem der Einlässe (2A, 3A, 4A) und/oder Auslässe (2B, 3B, 4B) der anderen Verbindungseinheiten (2, 3, 4) und für eine schaltbare fluidische Kopplung des Auslasses (2B, 3B, 4B) von jeglicher der Verbindungseinheiten (2, 3, 4) mit jeglichem der Einlässe (2A, 3A, 4A) und/oder Auslässe (2B, 3B, 4B) der anderen Verbindungseinheiten (2, 3, 4) eingerichtet ist; und
- eine Steuereinheit (6), um die Ventile (V1-V13) der Ventileinheit (5) gemäß einem voreingestellten Steuerschema zu schalten;
**gekennzeichnet durch** den Verfahrensschritt des
- Auswählens von einem von mehreren verschiedenen austauschbaren voreingestellten Steuerschemata für die Steuereinheit (6), wo jedes voreingestellte Steuerschema **gekennzeichnet ist durch** eine schemaspezifische Kombination von voreingestellten Einrichtungstypen für die genau drei Funktionseinrichtungen (D1, D2, D3), die mit den genau drei Verbindungseinheiten (2, 3, 4) zu verbinden sind.

## Revendications

1. Dispositif d'acheminement (1) pour un couplage fluidique configurable d'exactement trois dispositifs fonctionnels (D1, D2, D3) qui comprennent chacun un circuit de chauffage et/ou de refroidissement respectif, avec
- trois unités de connexion (2, 3, 4) destinées à connecter les trois dispositifs fonctionnels (D1, D2, D3) au dispositif d'acheminement (1), où chacune des unités de connexion (2, 3, 4) comprend une entrée (2A, 3A, 4A) et une sortie (2B, 3B, 4B) pour un couplage fluidique du circuit de chauffage et/ou de refroidissement du dispositif fonctionnel respectif (D1, D2, D3) avec une unité de vannes (5) du dispositif d'acheminement (1) ;
- l'unité de vannes (5) avec une pluralité de vannes (V1-V13) ; et
- une unité de régulation (6) configurée de manière à commuter les vannes (V1-V13) de l'unité de vannes (5) selon un schéma de régulation prédéfini ;
**caractérisé en ce que**
- le dispositif d'acheminement comprend exactement trois unités de connexion (2, 3, 4) ;
- l'unité de vannes (5) est configurée pour un couplage fluidique commutable de l'entrée (2A, 3A, 4A) de l'une quelconque des unités de connexion (2, 3, 4) avec l'une quelconque des entrées (2A, 3A, 4A) et/ou des sorties (2B, 3B, 4B) des autres unités de connexion (2, 3, 4) et pour un couplage fluidique commutable de la sortie (2B, 3B, 4B) de l'une quelconque des unités de connexion (2, 3, 4) avec l'une quelconque des entrées (2A, 3A, 4A) et/ou des sorties (2B, 3B, 4B) des autres unités de connexion (2, 3, 4) ;
et **en ce que**
- l'unité de régulation (6) est configurée de manière à maintenir au moins l'un parmi plusieurs schémas de régulation prédéfinis interchangeables différents, où chaque schéma de régulation prédéfini est **caractérisé par** une combinaison spécifique au schéma de types de dispositifs prédéfinis pour lesdits exactement trois dispositifs fonctionnels (D1, D2, D3) à connecter auxdites exactement trois unités de connexion (2, 3, 4).

2. Dispositif d'acheminement (1) selon la revendication 1,
**caractérisé en ce que**
les types de dispositifs prédéfinis pour les dispositifs fonctionnels (D1, D2, D3) comprennent un type de dispositif de source de chaleur et/ou un type de dispositif de stockage thermique et/ou un type de dispositif de charge calorifique et/ou un type de dispositif d'acheminement (1).

3. Dispositif d'acheminement (1) selon l'une quelconque des revendications précédentes,
**caractérisé en ce que**
les vannes (V1-V13) de la pluralité de vannes (V1-V13) sont toutes des vannes à deux voies.

4. Dispositif d'acheminement (1) selon l'une quelconque des revendications précédentes,
**caractérisé en ce que**
au moins deux des unités de connexion (2, 3, 4), de préférence deux unités quelconques des unités de connexion (2, 3, 4), peuvent être commutées afin d'être couplées en série par l'unité de vannes (5), ou au moins deux des unités de connexion (2, 3, 4), de préférence deux unités quelconques des unités de connexion (2, 3, 4), peuvent être commutées afin d'être couplées soit en série, soit en parallèle, par l'unité de vannes (5).

5. Dispositif d'acheminement (1) selon l'une quelconque des revendications précédentes,
**caractérisé en ce que**
- au moins l'une des unités de connexion (2, 3, 4), de préférence deux ou trois des unités de connexion (2, 3, 4), comprend ou comprennent au moins un capteur (FD1, FD2, FD3, TD1C, TD1H, TD2C, TD2H, TD3C, TD3H) et/ou au moins une interface de capteur à connecter à un capteur (ETD1C, ETD1H, ETD2C, ETD2H, ETD3C, ETD3H) du dispositif fonctionnel respectif (D1, D2, D3), où le capteur (FD1, FD2, FD3, TD1C, TD1H, TD2C, TD2H, TD3C, TD3H) et/ou l'interface de capteur est/sont configuré(s) de manière à fournir des données sensorielles ; et
- les schémas de régulation prédéfinis de l'unité de régulation (6) sont dépendants des données sensorielles.

6. Dispositif d'acheminement (1) selon la revendication 5,
**caractérisé en ce que**
ledit au moins un capteur (FD1, FD2, FD3, TD1C, TD1H, TD2C, TD2H, TD3C, TD3H) comprend un capteur de température (TD1C, TD2C, TD3C) pour détecter une température d'un milieu à l'entrée (2A, 3A, 4A) de l'unité de connexion respective (2, 3, 4) et/ou un capteur de température (TD1H, TD2H, TD3H) pour détecter la température d'un milieu à la sortie (2B, 3B, 4B) de l'unité de connexion respective (2, 3, 4) et/ou un débitmètre (FD1, FD2, FD3) pour détecter un débit d'un milieu à l'entrée (2A, 3A, 4A) ou à la sortie (2B, 3B, 4B) de l'unité de connexion respective (2, 3, 4).

7. Dispositif d'acheminement (1) selon l'une quelconque des revendications précédentes,
**caractérisé en ce que**
le dispositif d'acheminement (1) présente un boîtier (7) dans lequel l'unité de vannes (5) est agencée, où, de préférence, les unités de connexion (2, 3, 4) sont agencées sur le boîtier (7) et/ou l'unité de régulation (6) est agencée dans le boîtier (7).

8. Dispositif d'acheminement (1) selon l'une quelconque des revendications précédentes,
**caractérisé en ce que**
le dispositif d'acheminement (1) comprend une ou plusieurs unités de pompe (8) pour réguler un débit, où chaque unité de pompe (8) fait de préférence partie d'une des unités de connexion (2, 3, 4) ou est connectée à celle-ci.

9. Dispositif d'acheminement (1) selon l'une quelconque des revendications précédentes,
**caractérisé en ce que**
- des valeurs d'au moins un paramètre supplémentaire peuvent être définies dans l'unité de régulation (6) et/ou être récupérées par l'unité de régulation (6), où ledit au moins un paramètre supplémentaire comprend un ou plusieurs des paramètres suivants : une limite de température inférieure d'au moins l'un des dispositifs fonctionnels (D1, D2, D3) ; une limite de température supérieure d'au moins l'un des dispositifs fonctionnels (D1, D2, D3) ; une limite de débit inférieure d'au moins l'un des dispositifs fonctionnels (D1, D2, D3) ; une limite de débit supérieure d'au moins l'un des dispositifs fonctionnels (D1, D2, D3) ; une limite de température élevée de sécurité pour un milieu ; une limite de température faible de sécurité pour le milieu ; une température minimale actuellement disponible pour le milieu dans au moins l'un des dispositifs fonctionnels (D1, D2, D3) ; une température maximale actuellement disponible pour le milieu dans au moins l'un des dispositifs fonctionnels (D1, D2, D3) ; une disponibilité en cours d'au moins l'un des dispositifs fonctionnels (D1, D2, D3) ; une disponibilité en cours d'une fonction de chauffage et/ou de refroidissement d'au moins l'un des dispositifs fonctionnels (D1, D2, D3) ; une limite de débit supérieure pour au moins l'un des dispositifs fonctionnels (D1, D2, D3) ; une limite de débit inférieure pour au moins l'un des dispositifs fonctionnels (D1, D2, D3) ; un débit actuellement disponible du milieu à travers au moins l'un des dispositifs fonctionnels (D1, D2, D3) ; une spécification d'au moins l'un des dispositifs fonctionnels (D1, D2, D3), en particulier d'un dispositif fonctionnel de type dispositif de stockage thermique (D1, D2, D3) et/ou d'un dispositif fonctionnel de type dispositif de source de chaleur (D1, D2, D3), où la spécification peut comprendre : un indice de type indiquant si le dispositif de stockage thermique comprend un stockage d'eau sanitaire et/ou un matériau à changement de phase et/ou un système de chauffage urbain, et/ou indiquant si le dispositif de source de chaleur comprend une source renouvelable et/ou une source de biomasse et/ou une source renouvelable hybride et/ou une source fossile ; et/ou indiquant une capacité du dispositif de stockage thermique ; et/ou indiquant une température de changement de phase du matériau à changement de phase ; et/ou indiquant une différence de température entre la température de changement de phase du matériau à changement de phase et la température d'un milieu dans le stockage thermique ; et/ou indiquant une capacité latente du matériau à changement de phase ; et
- le schéma de régulation prédéfini de l'unité de régulation (6) est dépendant des valeurs de paramètres.

10. Dispositif d'acheminement (1) selon l'une quelconque des revendications précédentes,
**caractérisé en ce que**
dans un cas où le schéma de régulation prédéfini est **caractérisé par le fait que** deux des dispositifs fonctionnels (D1, D2, D3) connectés ou à connecter au dispositif d'acheminement (1) sont un dispositif de source de chaleur ou un dispositif de stockage thermique, l'unité de régulation (6) est configurée de manière à prioriser les dispositifs fonctionnels (D1, D2, D3), en particulier en fonction d'une exergie normalisée des dispositifs fonctionnels respectifs (D1, D2, D3), et à adapter le schéma de régulation de sorte que, lors du fonctionnement du dispositif d'acheminement (1), de la chaleur est fournie au dispositif fonctionnel restant (D1, D2, D3) à partir soit d'un seul, soit de deux, des deux premiers dispositifs fonctionnels (D1, D2, D3), en fonction d'un résultat de la priorisation.

11. Dispositif d'acheminement (1) selon l'une quelconque des revendications précédentes,
**caractérisé en ce que**
dans un cas où le schéma de régulation prédéfini est **caractérisé par le fait que** deux des dispositifs fonctionnels (D1, D2, D3) connectés ou à connecter au dispositif d'acheminement (1) sont un dispositif de charge calorifique ou un dispositif de stockage thermique, l'unité de régulation (6) est configurée de manière à prioriser les dispositifs fonctionnels (D1, D2, D3), en particulier en fonction d'une valeur maximale d'une température d'entrée requise, et à adapter le schéma de régulation de sorte que, lors du fonctionnement du dispositif d'acheminement (1), les deux dispositifs fonctionnels (D1, D2, D3) sont couplés en série et, en particulier, de la chaleur est fournie au dispositif fonctionnel (D1, D2, D3) présentant la valeur maximale la plus faible, par le biais du dispositif fonctionnel (D1, D2, D3) présentant la valeur maximale la plus élevée.

12. Dispositif d'acheminement (1) selon l'une quelconque des revendications précédentes,
**caractérisé en ce que**
le schéma de régulation peut être adapté par l'unité de régulation (6) selon différents modes de fonctionnement, où, en particulier, les modes de fonctionnement comprennent un ou plusieurs des modes de fonctionnement suivants : un mode de fourniture d'eau chaude sanitaire et/ou un mode de chauffage et/ou un mode de stockage et/ou un mode de gestion d'énergie.

13. Système d'acheminement modulaire présentant deux dispositifs d'acheminement ou plus (1) selon l'une quelconque des revendications précédentes, mutuellement connectés par l'intermédiaire de l'une des unités de connexion respectives (2, 3, 4).

14. Système d'acheminement modulaire selon la revendication 13,
**caractérisé par**
- un premier dispositif d'acheminement subordonné (1) dans lequel le schéma de régulation prédéfini est **caractérisé par** au moins l'une, de préférence deux, des unités de connexion (2, 3, 4) à connecter à un dispositif de source de chaleur en tant que dispositif fonctionnel (D1, D2, D3), et une unité de connexion (2, 3, 4) à connecter à un dispositif d'acheminement superordonné (1) ; et/ou
- un deuxième dispositif d'acheminement subordonné (1), dans lequel le schéma de régulation prédéfini est **caractérisé par** au moins l'une, de préférence deux, des unités de connexion (2, 3, 4) à connecter à un dispositif de stockage thermique en tant que dispositif fonctionnel (D1, D2, D3), et une unité de connexion (2, 3, 4) à connecter au dispositif d'acheminement superordonné (1) ; et/ou
- un troisième dispositif d'acheminement subordonné (1) dans lequel le schéma de régulation prédéfini est **caractérisé par** deux des unités de connexion (2, 3, 4) à connecter à un dispositif de charge calorifique en tant que dispositif fonctionnel (D1, D2, D3), et une unité de connexion (2, 3, 4) à connecter au dispositif d'acheminement superordonné (1) ; et
- le dispositif d'acheminement superordonné (1), dans lequel le schéma de régulation prédéfini est **caractérisé par** au moins l'une des unités de connexion (2, 3, 4) à connecter à l'un des dispositifs d'acheminement subordonnés (1), en particulier **caractérisé par** deux des unités de connexion (2, 3, 4) à connecter chacune à un dispositif d'acheminement subordonné respectif (1) des dispositifs d'acheminement subordonnés (1), ou **caractérisé par** trois unités de connexion (2, 3, 4) à connecter chacune à un dispositif d'acheminement subordonné respectif (1) des dispositifs d'acheminement subordonnés (1).

15. Procédé de fonctionnement d'un dispositif d'acheminement (1), où le dispositif d'acheminement (1) est conçu pour un couplage fluidique configurable d'exactement trois dispositifs fonctionnels (D1, D2, D3) qui comprennent chacun un circuit de chauffage et/ou de refroidissement respectif, le dispositif d'acheminement (1) comprenant :
- exactement trois unités de connexion (2, 3, 4) pour connecter lesdits exactement trois dispositifs fonctionnels (D1, D2, D3) au dispositif d'acheminement (1), où chacune des unités de connexion (2, 3, 4) comprend une entrée (2A, 3A, 4A) et une sortie (2B, 3B, 4B) pour un couplage fluidique du circuit de chauffage et/ou de refroidissement du dispositif fonctionnel connecté respectif (D1, D2, D3) avec une unité de vannes (5) du dispositif d'acheminement (1) ;
- l'unité de vannes (5) avec une pluralité de vannes (V1-V13), où l'unité de vannes (5) est configurée pour un couplage fluidique commutable de l'entrée (2A, 3A, 4A) de l'une quelconque des unités de connexion (2, 3, 4) avec l'une quelconque des entrées (2A, 3A, 4A) et/ou des sorties (2B, 3B, 4B) des autres unités de connexion (2, 3, 4), et pour un couplage fluidique commutable de la sortie (2B, 3B, 4B) de l'une quelconque des unités de connexion (2, 3, 4) avec l'une quelconque des entrées (2A, 3A, 4A) et/ou des sorties (2B, 3B, 4B) des autres unités de connexion (2, 3, 4) ; et
- une unité de régulation (6) pour commuter les vannes (V1-V13) de l'unité de vannes (5) selon un schéma de régulation prédéfini ;
**caractérisé par** l'étape de procédé ci-dessous consistant à
- sélectionner l'un parmi différents schémas de régulation prédéfinis interchangeables pour l'unité de régulation (6), où chaque schéma de régulation prédéfini est **caractérisé par** une combinaison spécifique au schéma de types de dispositifs prédéfinis pour lesdits exactement trois dispositifs fonctionnels (D1, D2, D3) à connecter auxdits exactement trois unités de connexion (2, 3, 4).
